(19) **Europäisches Patentamt / European Patent Office / Office européen des brevets**

(11) **EP 4 741 523 A1**

(12) **EUROPEAN PATENT APPLICATION**
published in accordance with Art. 153(4) EPC

(43) Date of publication:
**13.05.2026 Bulletin 2026/20**

(21) Application number: **24836110.7**

(22) Date of filing: **04.07.2024**

(51) International Patent Classification (IPC):
**C22C 38/00** (2006.01)   **C21D 8/12** (2026.01)
**C21D 9/46** (2006.01)   **C22C 38/60** (2006.01)
**C23C 22/00** (2006.01)   **H01F 1/147** (2006.01)

(52) Cooperative Patent Classification (CPC):
**C21D 8/12; C21D 9/46; C22C 38/00; C22C 38/60; C23C 22/00; H01F 1/147;** Y02P 10/20

(86) International application number:
**PCT/JP2024/024295**

(87) International publication number:
**WO 2025/009598 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.07.2023 JP 2023111726**

(71) Applicant: Nippon Steel Corporation
**Tokyo 100-8071 (JP)**

(72) Inventors:
• **WADA Naoki**
  **Tokyo 100-8071 (JP)**
• **HAMAMURA Hideyuki**
  **Tokyo 100-8071 (JP)**
• **TAKAHASHI Masaru**
  **Tokyo 100-8071 (JP)**

(74) Representative: **Vossius & Partner**
**Patentanwälte Rechtsanwälte mbB**
**Siebertstraße 3**
**81675 München (DE)**

(54) **GRAIN-ORIENTED ELECTROMAGNETIC STEEL SHEET AND METHOD FOR MANUFACTURING SAME**

(57)    This grain-oriented electrical steel sheet includes a base steel sheet, a forsterite film optionally formed on the base steel sheet, and an insulating coating formed on the base steel sheet or the forsterite film. In a case where the base steel sheet has a plurality of grooves extending in a direction intersecting a rolling direction, a direction in which the plurality of grooves extend is defined as a longitudinal groove direction, a distance in the groove from an imaginary line that is an extension of a surface of the base steel sheet to the groove, along a straight line from the imaginary line in the sheet thickness direction of the base steel sheet, is defined as a groove depth, a width of the groove in the rolling direction is defined as a groove width, a position where the groove depth is 0.0 μm is defined as an end of the groove, and a 5 mm region from the end of the groove toward a center portion in the longitudinal groove direction is defined as an end portion of the groove, depths of the groove and widths of the groove at a plurality of positions in the end portion of the groove satisfy a predetermined relationship.

FIG. 1

**Description**

TECHNICAL FIELD

The present invention relates to a grain-oriented electrical steel sheet and a method for manufacturing the same.

Priority is claimed on Japanese Patent Application No. 2023-111726, filed July 06, 2023, the content of which is incorporated herein by reference.

BACKGROUND ART

A grain-oriented electrical steel sheet is a soft magnetic material and is mainly used as a core material of a transformer. Thus, the grain-oriented electrical steel sheet is desired so as to have magnetic characteristics such as a high magnetic flux density and a low iron loss.

The iron loss is a loss due to thermal energy consumption that occurs when a core is excited by an AC magnetic field, and the iron loss should be as low as possible from the viewpoint of energy saving. The level of the iron loss is affected by magnetic susceptibility, a sheet thickness, a coating tension, an impurity amount, an electric resistivity, a crystal grain size, a magnetic domain width, and the like. Even at present when various techniques have been developed regarding the grain-oriented electrical steel sheet, research and development for reducing the iron loss is being continued in order to increase energy conversion efficiency.

A technique for irradiating a steel sheet with a laser has been proposed as one method for reducing the iron loss. In this technique, strain is introduced to the surface of the steel sheet by the laser irradiation, and the magnetic domain width is refined. As a result, the eddy-current loss that is part of the iron loss can be reduced.

For example, Patent Document 1 discloses a method for manufacturing a grain-oriented electrical steel sheet in which a magnetic domain is controlled by irradiation with a laser beam. The method includes a step of irradiating a surface of the grain-oriented electrical steel sheet with a focused continuous wave laser beam while scanning the surface in a direction inclined from a rolling direction of the grain-oriented electrical steel sheet and a step of repeating a portion scanned with the continuous wave laser beam while shifting the portion at a predetermined interval. When the average power of the continuous wave laser beam is represented as P (W), the scanning speed is represented as Vc (mm/s), the predetermined interval is represented as PL (mm), and an input energy Ua is defined as $Ua = P/(Vc \times PL)$ (mJ/mm$^2$), 1.0 mm $\leq$ PL $\leq$ 3.0 mm, and 0.8 mJ/mm$^2 \leq$ Ua $\leq$ 2.0 mJ/mm$^2$ are satisfied.

Patent Document 1 discloses that iron losses in both directions of an L direction and a C direction of the grain-oriented electrical steel sheet can be reduced easily while ensuring high productivity.

However, for example, when a wound core is manufactured, stress-relief annealing is preferable because the grain-oriented electrical steel sheet is bent and formed. Accordingly, in such an above-described method of introducing strain into the surface by the laser irradiation, the strain introduced into the grain-oriented electrical steel sheet is released by the stress-relief annealing. Thus, an effect of magnetic domain refinement by the laser irradiation disappears.

Thus, it has been proposed that the magnetic domain width is refined to reduce the eddy-current loss by forming a groove in a sheet surface as in the case of strain introduction. In such a case, since the groove remains even though the stress-relief annealing is performed, the effect of magnetic domain refinement does not disappear.

Examples of the method for forming a groove in a steel sheet include an electrolytic etching method for forming a groove on a sheet surface of a grain-oriented electrical steel sheet by electrolytic etching, a gear pressing method for forming a groove on a sheet surface of a grain-oriented electrical steel sheet by mechanically pressing a gear on the sheet surface, and a laser irradiation method for melting and evaporating a steel sheet by laser irradiation (area irradiated with a laser beam) to form a groove. For example, Patent Document 2 discloses a method for improving iron loss characteristics of grain-oriented electrical steel sheets that can withstand stress-relief annealing, in which irradiation is performed by controlling a laser beam and a recessed portion having a width of 0.5 mm or less and a depth of 10 $\mu$m or more is formed in a rolling direction.

Here, in general, an insulating coating is formed on a surface of the grain-oriented electrical steel sheet, in order to impart electrical insulation properties, tensile strength, heat resistance, and the like to the steel sheet. As described in Patent Document 2, in the grain-oriented electrical steel sheet, a groove is formed on a steel sheet approximately parallel to the width direction, so that the magnetic domain width is refined, and the iron loss is reduced. On the other hand, the width or depth of end portions (in the vicinity of the leading end and trailing end) of the formed groove in the longitudinal direction changes as compared with the center portion. Therefore, it is difficult to apply a coating solution to every corner of the end portion of the groove. As a result, at an end portion of the groove, there may be locations where the adhesion of the insulating coating is insufficient. The length of a region where such width or depth changes at the end portions of the groove is a relatively small proportion with respect to the length of the entire groove. Therefore, it is considered that the influence on the magnetic characteristics is not so large even though the adhesion of the insulating coating is low in this region. However, in a case where the adhesion of the insulating coating at the end portion of the groove is low, a base metal is exposed on the surface, which may cause rust. **In** addition, in such a location where the base metal is exposed, there is a possibility that an interlayer current significantly flows when the grain-oriented electrical steel sheets are laminated, resulting in an increase in the iron loss.

However, in Patent Document 2, such exposure of the base metal and occurrence of rust are not studied.

As a technique for controlling the shape of the end portion of the groove, for example, Patent Document 3 discloses a technique in which etching of an end portion of a steel strip in the width direction is minimized in such a manner that the groove depth at the end portion in the width direction is set to 70% or less of the groove depth at the center portion in the width direction, in a method for manufacturing a grain-oriented silicon steel sheet in which linear or dotted grooves are formed on a surface of the steel strip.

As a technique for improving adhesion of an insulating coating and rust resistance or the like at an end portion of the groove, for example, Patent Document 4 discloses a grain-oriented electrical steel sheet in which a first angle 0 formed by a sheet surface and a straight line at the end of the groove and an aspect ratio A obtained by dividing an average groove depth D by an average groove width W satisfy $\theta < -21 \times A + 77$.

In addition, Patent Document 5 discloses a grain-oriented electrical steel sheet including linear grooves formed in a direction intersecting a rolling direction on one surface or both surfaces of an electrical steel sheet, in which each groove includes an inclined portion (GS) and a flat portion (US) in a cross section including a longitudinal direction of the groove and a rolled surface normal direction of the steel sheet, and a length of the inclined portion and a length of the flat portion satisfy a predetermined relationship.

Citation List

Patent Documents

Patent Document 1: Japanese Patent No. 4669565
Patent Document 2: Japanese Unexamined Patent Application, First Publication No. H06-57335
Patent Document 3: Japanese Patent No. 4016431
Patent Document 4: Japanese Patent No. 6418322
Patent Document 5: Japanese Unexamined Patent Application, First Publication No. 2022-503782

SUMMARY OF INVENTION

Technical Problem

However, in Patent Document 3, the reason why etching of the end portion of the steel strip in the width direction is minimized to make the groove depth at the end portion in the width direction is set to 70% or less of the groove depth at the center portion in the width direction is to prevent the fracture of the steel strip in the subsequent step in a case where the linear grooves are introduced by electrolytic etching, and the adhesion of the insulating coating and rust resistance at the end portion of the groove are not described.

In addition, in Patent Document 4, there is no description regarding the width and depth of the groove at the end portion of the groove, and as a result of studies by the present inventors, it has been found that the adhesion of the insulating coating and rust resistance at the end portion of the groove cannot be necessarily improved.

In addition, in Patent Document 5, there is no description regarding the groove width at the end portion of the groove, and as a result of studies by the present inventors, it has been found that the adhesion of the insulating coating and rust resistance at the end portion of the groove cannot be necessarily improved. In addition, it has been found that a decrease in the magnetic flux density due to the formation of a groove cannot be necessarily minimized.

As described above, in the related art, the techniques for improving the adhesion of the insulating coating and rust resistance at the end portion of the groove in the grain-oriented electrical steel sheet in which magnetic domain refinement by groove formation is performed have been proposed, but it cannot be said that sufficient studies have been made.

Therefore, an object of the present invention is to provide a grain-oriented electrical steel sheet having high adhesion of an insulating coating and excellent rust resistance even at an end portion of the groove.

Solution to Problem

The present inventors have studied a method for improving adhesion of an insulating coating at an end portion of the groove. As a result, it has been found that adhesion of an insulating coating and rust resistance or the like are improved by forming a groove into a shape in which the depth decreases and the width decreases (so as to become shallower and narrower) approaching the end of the groove in the longitudinal direction (longitudinal groove direction), and the depth and width satisfy a certain relationship.

The present invention has been made on the basis of the above-described findings. The gist of the present invention is as follows.

[1] A grain-oriented electrical steel sheet according to an aspect of the present invention includes: a base steel sheet; a forsterite film optionally formed on the base steel sheet; and an insulating coating formed on the base steel sheet or the forsterite film, in which the base steel sheet has a plurality of grooves extending in a direction intersecting a rolling direction, in a case where a direction in which the plurality of grooves extend is defined as a longitudinal groove direction, a distance in the groove from an imaginary line that is an extension of a surface of the base steel sheet to the groove, along a straight line from the imaginary line in the sheet thickness direction of the base steel sheet, is defined as a groove depth, a width of the groove in the rolling direction is defined as a groove width, a position where the groove depth is 0.0 $\mu$m is defined as an end of the groove, and a 5 mm region extending from the end of the groove toward a center portion in the longitudinal groove direction is defined as an end portion of the groove, in the longitudinal groove direction of the end portion of the groove, in units of $\mu$m, a groove depth at a position 1 mm from the end of the groove is defined as D1 and a groove width at the position 1 mm from the end of the groove is defined as W1, a groove depth at a position 2 mm from the end of the groove is defined as D2 and a groove width at the position 2 mm from the end of the groove is defined as W2, a groove depth at a position 3 mm from the end of the groove is defined as D3 and a groove width at the position 3 mm from the end of the groove is defined as W3, a groove depth at a position 4 mm from the end of the groove is defined as D4 and a groove width at the position 4 mm from the end of the groove is defined as W4, and a groove depth at a position 5 mm from the end of the groove is defined as D5 and a groove width at the position 5 mm from the end of the groove is defined as W5, an average groove width of the groove at the center portion in the longitudinal groove direction is defined as Wc, and an average groove depth of the groove at the center portion in the longitudinal groove direction is defined as Dc, the D1, the D2, the D3, the D4, the D5, the W1, the W2, the W3, the W4, and the W5 satisfy Formulae (1) and (2), and in the end portion of the groove, in a case where a width of the groove at a portion where a depth of the groove is 0.05 × Dc is defined as WO.05, and a width of the groove at a portion where a depth of the groove is 0.50 × Dc is defined as WO.50, WO.05 and WO.50 satisfy Formulae (3) and (4),

$$D5 \geq D4 \geq D3 \geq D2 \geq D1 \cdots (1),$$

$$W5 \geq W4 \geq W3 \geq W2 \geq W1 \cdots (2),$$

$$0.004 \leq W0.05/Wc \leq 0.210 \cdots (3),$$

$$0.180 \leq W0.50/Wc \leq 0.810 \cdots (4).$$

[2] In the grain-oriented electrical steel sheet according to [1], the WO.05 and the WO.50 may satisfy Formulae (5) and (6),

$$0.008 \leq W0.05/Wc \leq 0.160 \cdots (5),$$

$$0.380 \leq W0.50/Wc \leq 0.710 \cdots (6).$$

[3] In the grain-oriented electrical steel sheet according to [1], the D1, the D2, the D3, the D4, and the D5 may satisfy Formula (1'),

$$D5 > D4 > D3 > D2 > D1 \cdots (1').$$

[4] In the grain-oriented electrical steel sheet according to [2], the D1, the D2, the D3, the D4, and the D5 may satisfy Formula (1'),

$$D5 > D4 > D3 > D2 > D1 \cdots (1').$$

[5] In the grain-oriented electrical steel sheet according to any one of [1] to [4], the Dc may be 5.0 to 40.0 $\mu$m and the Wc may be 10.0 to 200.0 $\mu$m.

[6] In the grain-oriented electrical steel sheet according to any one of [1] to [4], an interval between the plurality of grooves in the rolling direction may be 2 to 10 mm, and an angle between the longitudinal groove direction and the rolling direction may be 60 to 120 degrees.

[7] In the grain-oriented electrical steel sheet according to [5], an interval between the plurality of grooves in the rolling direction may be 2 to 10 mm, and an angle between the longitudinal groove direction and the rolling direction may be 60 to 120 degrees.

[8] A method for manufacturing a grain-oriented electrical steel sheet according to an aspect of the present invention includes: a groove forming step of irradiating a steel sheet with a laser beam while scanning the steel sheet in a direction intersecting a rolling direction to form a groove extending in the rolling direction; a decarburization annealing step of performing decarburization annealing on the steel sheet after the groove forming step; a final annealing step of performing final annealing on the steel sheet after the decarburization annealing step; and an insulating coating forming step of forming an insulating coating on the steel sheet that serves as a base steel sheet and is obtained after the final annealing step, to obtain a grain-oriented electrical steel sheet having the base steel sheet, a forsterite film optionally formed on the base steel sheet, and the insulating coating formed on the base steel sheet or on the forsterite film, in which in the groove forming step, in a case where a direction along which the groove extends is defined as a longitudinal groove direction, a distance in the groove from an imaginary line that is an extension of a surface of the base steel sheet to the groove, along a straight line from the imaginary line in the sheet thickness direction of the base steel sheet, is defined as a groove depth, a width of the groove in the rolling direction is defined as a groove width, a position where the groove depth is 0.0 $\mu$m is defined as an end of the groove, and a 5 mm region extending from the end of the groove toward a center portion in the longitudinal groove direction is defined as an end portion of the groove, in the longitudinal groove direction of the end portion of the groove, in units of $\mu$m, a groove depth at a position 1 mm from the end of the groove is defined as D1 and a groove width at the position 1 mm from the end of the groove is defined as W1, a groove depth at a position 2 mm from the end of the groove is defined as D2 and a groove width at the position 2 mm from the end of the groove is defined as W2, a groove depth at a position 3 mm from the end of the groove is defined as D3 and a groove width at the position 3 mm from the end of the groove is defined as W3, a groove depth at a position 4 mm from the end of the groove is defined as D4 and a groove width at the position 4 mm from the end of the groove is defined as W4, and a groove depth at a position 5 mm from the end of the groove is defined as D5 and a groove width at the position 5 mm from the end of the groove is defined as W5, an average groove width of the groove at the center portion in the longitudinal groove direction is defined as Wc, and an average groove depth of the groove at the center portion in the longitudinal groove direction is defined as Dc, the groove is formed by irradiation with the laser beam in such a manner that the D1, the D2, the D3, the D4, the D5, the W1, the W2, the W3, the W4, and the W5 satisfy Formulae (1) and (2), and in the end portion of the groove, in a case where a width of the groove at a portion where a depth of the groove is $0.05 \times Dc$ is defined as W0.05, and a width of the groove at a portion where a depth of the groove is $0.50 \times Dc$ is defined as W0.50, W0.05 and W0.50 satisfy Formulae (3) and (4), by changing a distance between a focal point of the laser beam and the surface of the base steel sheet in accordance with a distance from the end of the groove at the end portion of the groove,

$$D5 \geq D4 \geq D3 \geq D2 \geq D1 \cdots (1),$$

$$W5 \geq W4 \geq W3 \geq W2 \geq W1 \cdots (2),$$

$$0.004 \leq W0.05/Wc \leq 0.210 \cdots (3),$$

$$0.180 \leq W0.50/Wc \leq 0.810 \cdots (4).$$

[9] In the method for manufacturing a grain-oriented electrical steel sheet according to [8], in the groove forming step, the groove may be formed in such a manner that the W0.05 and the W0.50 satisfy Formulae (5) and (6),

$$0.008 \leq W0.05/Wc \leq 0.160 \cdots (5),$$

$$0.380 \leq W0.50/Wc \leq 0.710 \cdots (6).$$

[10] In the method for manufacturing a grain-oriented electrical steel sheet according to [8] or [9], in the groove forming step, the groove in which the Dc is 5.0 to 40.0 $\mu$m and the Wc is 10.0 to 200.0 $\mu$m may be formed under irradiation conditions of the laser beam that a power of the laser beam is set to 200 to 3000 W, a focused spot diameter of the laser defined as a diameter in the rolling direction that contains 86% of the power is set to 10 to 1000 $\mu$m, the focused spot diameter of the laser beam in a sheet width direction is 10 to 1000 $\mu$m, and a scanning speed is set to 2 to 50 m/s.

[11] In the method for manufacturing a grain-oriented electrical steel sheet according to [8] or [9], in the groove forming step, the groove may be formed in such a manner that an interval between a plurality of grooves, each identical to the groove, in the rolling direction is 2 to 10 mm, and an angle between the longitudinal groove direction and the rolling direction is 60 to 120 degrees.

[12] In the method for manufacturing a grain-oriented electrical steel sheet according to [10], in the groove forming step, the groove may be formed in such a manner that an interval between a plurality of the grooves in the rolling direction is 2 to 10 mm, and an angle between the longitudinal groove direction and the rolling direction is 60 to 120 degrees.

Advantageous Effects of Invention

According to the above-described aspects of the present invention, it is possible to obtain the grain-oriented electrical steel sheet having high adhesion of the insulating coating and excellent rust resistance even at the end portion of the groove.

BRIEF DESCRIPTION OF DRAWINGS

[FIG. 1] A view illustrating an example of the formation of grooves on a grain-oriented electrical steel sheet according to the present embodiment.
[FIG. 2A] A schematic view of a cross section including a groove and parallel to a rolling direction and a sheet thickness direction of a grain-oriented electrical steel sheet according to the present embodiment.
[FIG. 2B] a schematic view of a cross section of the grain-oriented electrical steel sheet according to the present embodiment, the cross section being parallel to the sheet thickness direction and a groove extension direction and being taken along the center of the groove width.
[FIG. 3A] A schematic view of a cross section including a groove and parallel to the rolling direction and the sheet thickness direction of the grain-oriented electrical steel sheet according to the present embodiment after an insulating coating is removed to measure the width and depth of the groove.
[FIG. 3B] A schematic view of a cross section of the grain-oriented electrical steel sheet according to the present embodiment after the insulating coating is removed to measure the width and depth of the groove, the cross section being parallel to the sheet thickness direction and the groove extension direction and being taken along the center of the groove width.

DESCRIPTION OF EMBODIMENTS

A grain-oriented electrical steel sheet according to an embodiment of the present invention (grain-oriented electrical steel sheet according to the present embodiment) and a method for manufacturing the same will be described.

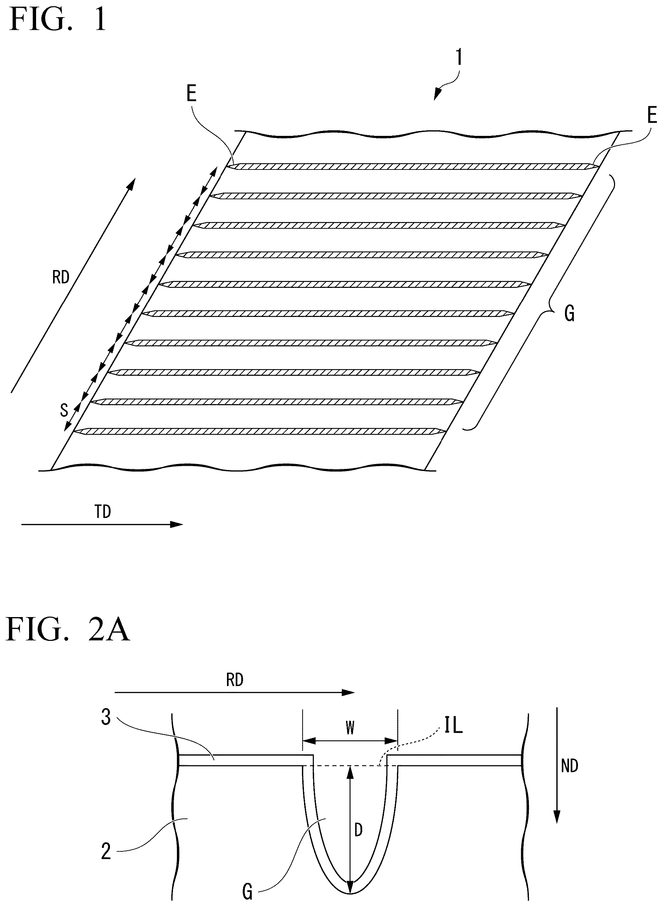

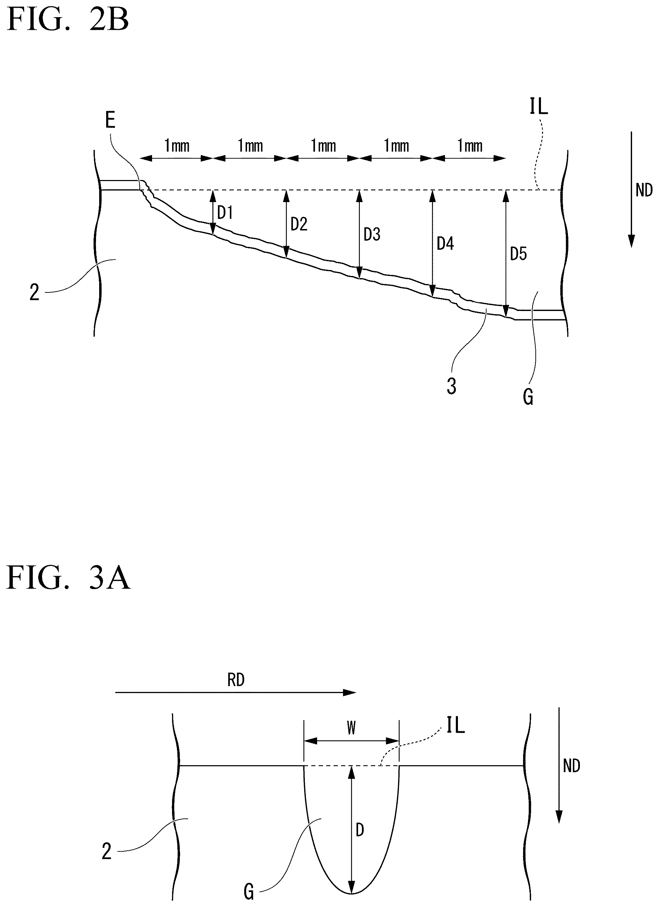

As illustrated in FIGS. 1, 2A, and 2B, a grain-oriented electrical steel sheet 1 according to the present embodiment includes a base steel sheet 2 and an insulating coating 3 formed on the base steel sheet 2.

Alternatively, although not illustrated, a forsterite film may be provided between the base steel sheet 2 and the insulating coating 3. That is, the base steel sheet 2, the forsterite film formed on the base steel sheet 2, and the insulating coating 3 formed on the forsterite film may be provided.

In the grain-oriented electrical steel sheet 1 according to the present embodiment, the base steel sheet 2 has a plurality of grooves extending in a direction intersecting a rolling direction. Each groove has a predetermined shape described later at an end portion of the groove which is a 5 mm region from an end E of the groove toward the center portion in a longitudinal groove direction.

Details will be described below.

In the present embodiment, a direction in which a groove extends is defined as a longitudinal groove direction. In addition, a distance in a groove from an imaginary line that is an extension of a surface of the base steel sheet to the groove (the bottom of the groove), along a straight line from the imaginary line in the sheet thickness direction of the base steel sheet is defined as a groove depth, and a width of the groove in the rolling direction is defined as a groove width. In addition, a position where the groove depth is 0.0 $\mu$m is defined as an end of the groove, and a 5 mm region extending from the end of the groove toward a center portion in the longitudinal groove direction is defined as an end portion of the groove. In addition, in the longitudinal groove direction of the end portion of the groove, in units of $\mu$m, a groove depth at a position 1 mm from the end of the groove is defined as D1 and a groove width at the position 1 mm from the end of the groove is defined as W1, a groove depth at a position 2 mm from the end of the groove is defined as D2 and a groove width at the position 2 mm from the end of the groove is defined as W2, a groove depth at a position 3 mm from the end of the groove is defined as D3 and a groove width at the position 3 mm from the end of the groove is defined as W3, a groove depth at a position 4 mm from the end of the groove is defined as D4 and a groove width at the position 4 mm from the end of the groove is defined as W4, and a groove depth at a position 5 mm from the end of the groove is defined as D5 and a groove width at the position 5 mm from the end of the groove is defined as W5. In addition, an average groove width of the groove at the center portion in the longitudinal groove direction is defined as Wc, and an average groove depth of the groove at the center portion in the longitudinal groove direction is defined as Dc.

<Grain-Oriented Electrical Steel Sheet>

[Base Steel Sheet]

(Groove)

In the grain-oriented electrical steel sheet, grooves are formed substantially parallel to the sheet width direction of the steel sheet for the purpose of reducing an iron loss. On the other hand, in the related art, there has been a case where the width or depth of end portions (in the vicinity of the leading end and trailing end) in the longitudinal groove direction change as compared with those of a center portion, and a location where adhesion of an insulating coating is insufficient may be present.

In contrast, in the grain-oriented electrical steel sheet 1 according to the present embodiment, at the end portion of the groove which is a 5 mm region from an end E (a position where the groove depth is 0.0 $\mu$m) of the groove toward the center portion in the longitudinal groove direction in a groove G formed in the base steel sheet 2, the groove depth decreases to be shallower, the groove width decreases to be narrower as approaching the end (end E) in the longitudinal groove direction, and the groove depth and the groove width thus satisfy a predetermined relationship, thereby improving the adhesion of the insulating coating.

More specifically, in a case where the depths D1 to D5 of the groove and the widths W1 to W5 of the groove at the positions 1 to 5 mm from the end of the groove in the end portion of the groove satisfy the following Formulae (1) and (2) (provided that D5 $\neq$ D1 and W5 $\neq$ W1), and in the end portion of the groove, the width of the groove at the portion where the depth of the groove is 0.05 $\times$ Dc is W0.05, and the width of the groove at the portion where the depth of the groove is 0.50 $\times$ Dc is W0.50, W0.05 and W0.50 satisfy the following Formulae (3) and (4), respectively, thereby improving the adhesion of the insulating coating or the like.

$$D5 \geq D4 \geq D3 \geq D2 \geq D1 \cdots (1),$$

$$W5 \geq W4 \geq W3 \geq W2 \geq W1 \cdots (2),$$

$$0.004 \leq W0.05/Wc \leq 0.210 \cdots (3),$$

$$0.180 \leq W0.50/Wc \leq 0.810 \cdots (4).$$

The reason why the adhesion of the insulating coating is improved in a case where the shape of the groove satisfies Formulae (1) to (4) in the end portion of the groove is not clear, but it is considered that in a case where Formulae (1) to (4) are satisfied, the width of the groove or the depth of the groove in the end portion of the groove gently changes, and a coating solution is easily applied to every corner of the groove. In addition, there is also an effect that the magnetic flux density is increased in a case where the above-described formulae are satisfied because the amount of reduction of a base metal due to the groove can be reduced.

As described above, in the base steel sheet 2 of the grain-oriented electrical steel sheet 1 according to the present embodiment, the groove depth and the groove width decrease so as to become shallower and narrower approaching the end in the longitudinal groove direction. As can be seen from Formulae (1) and (2), the groove depth and the groove width may continuously change (D5 > D4 > D3 > D2 > D1), but there may be a region where the depth and the width do not change within a certain range (for example, D5 = D4 $\geq$ D3 = D2 $\geq$ D1 may be satisfied).

In a case where Formula (1) and/or Formula (2) is not satisfied, the depth or width of the groove rapidly changes at the end in the longitudinal groove direction, and it is considered that the adhesion of the insulating coating is deteriorated because it is difficult to apply the coating solution in the region.

In addition, as illustrated in Formulae (3) and (4), in the base steel sheet 2 of the grain-oriented electrical steel sheet 1 according to the present embodiment, the groove width is also narrowed in a portion where the groove depth is shallow.

In a case where Formula (3) and/or Formula (4) is not satisfied, that is, the degree of change in the groove depth is largely different from the degree of change in the groove width at the end portion of the groove, it is considered that there are regions where the groove width is narrow but the groove depth is deep, and the coating solution is difficult to be applied into the regions, resulting in the deterioration of the adhesion of the insulating coating.

W0.05 and W0.50 preferably satisfy Formulae (3') and (4'), more preferably satisfy Formulae (5) and (6), and still more preferably satisfy Formulae (5') and (6').

$$0.005 \leq W0.05/Wc \leq 0.200 \cdots (3')$$

$$0.200 \leq W0.50/Wc \leq 0.800 \cdots (4')$$

$$0.008 \leq W0.05/Wc \leq 0.160 \cdots (5)$$

$$0.380 \leq W0.50/Wc \leq 0.710 \cdots (6)$$

$$0.010 \leq W0.05/Wc \leq 0.150 \cdots (5')$$

$$0.400 \leq W0.50/Wc \leq 0.700 \cdots (6')$$

In this case, an effect of further improving the adhesion of the insulating coating is obtained.

The shape of the groove other than the end portion of the groove is not limited, and it is preferable that an average groove depth Dc at the center portion in the longitudinal groove direction is 5.0 to 40.0 $\mu$m and an average groove width Wc is 10.0 to 200.0 $\mu$m.

Within this range, the iron loss reduction effect due to magnetic domain refinement is increased.

An interval S between the plurality of grooves G in the rolling direction RD is preferably 2 to 10 mm. The interval S between the grooves is a distance from a center of the groove in a width direction to a center of an adjacent groove in the width direction. The intervals of the plurality of grooves G may not be equal intervals as long as each interval is within the above-described range but are preferably equal intervals.

In addition, the angle between the direction along which the groove extends (longitudinal groove direction) and the rolling direction is preferably 60 to 120 degrees. Since the direction along which the groove extends is preferable to be closer to a direction orthogonal to the rolling direction, the direction is more preferably at 75 to 115 degrees with respect to the rolling direction. The plurality of grooves are preferably substantially parallel to each other.

In a case where the extension direction and intervals of the grooves are within the above-described range, the iron loss reduction effect increases. The shape of the groove is not limited, and for example, the cross section has a substantially rectangular shape or a substantially triangular shape. In addition, the cross section may be an arch shape or the like constituting a part of a circle.

The groove extends in the sheet width direction of the grain-oriented electrical steel sheet and extends linearly. The grooves may be formed over the entire region in the sheet width direction of the grain-oriented electrical steel sheet or may be formed in a part in the sheet width direction.

The depths (D1 to D5) of the groove and the widths (W1 to W5) of the groove at the end portion of the groove are measured using a laser microscope (3D laser microscope using a confocal optical system by a pinhole). In a case where the grain-oriented electrical steel sheet has an insulating coating, the groove depth and the groove width on the surface of the base steel sheet excluding the insulating coating are measured.

Specifically, first, the insulating coating of the grain-oriented electrical steel sheet can be removed by, for example, the following method. The grain-oriented electrical steel sheet having the insulating coating is immersed in an aqueous sodium hydroxide solution consisting of 30 mass% NaOH and 70 mass% $H_2O$ at 80°C for 20 minutes and then washed with water. Finally, drying is performed with a warm air blower for 1 minute.

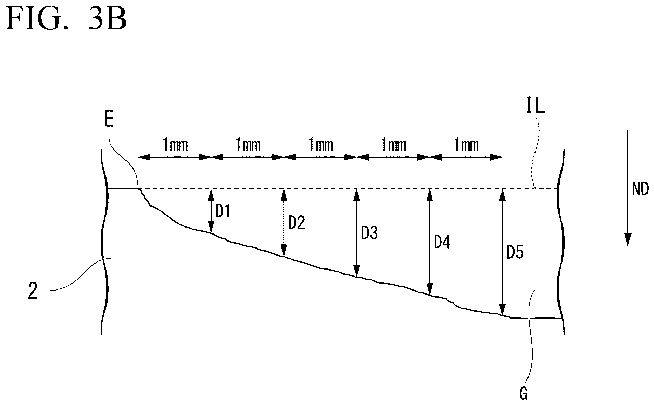

After the insulating coating is removed in the manner described above, a measurement cross-sectional curve forming the groove profile is obtained in a cross section parallel to the sheet thickness direction and groove extension direction and passing through the center of the groove width by measurement using a laser microscope. After a low-pass filter with a cut-off value λs is applied to the measurement cross-sectional curve to obtain a cross-sectional curve, band-pass filters with cut-off values λf and λc are applied to the cross-sectional curve to remove a long wavelength component and a short wavelength component from the cross-sectional curve. As a result, as illustrated in FIG. 3B, a waviness curve WCL that defines the groove profile is obtained in a cross section parallel to the sheet thickness direction and groove extending direction, and passing through the center of the groove width. The waviness curve is a kind of profile curve suitable for simplifying the shape of the profile itself with a smooth line.

In the waviness curve WCL, an imaginary line IL that is an extension of the surface of the base steel sheet is drawn in a groove extension direction (horizontal direction in the plane of drawing), and the start point of the imaginary line IL, that is, a position where the groove depth is 0.0 μm is defined as an end E of the groove. A straight line distance between the imaginary line IL and the base steel sheet 2 is determined at a position 1 mm from the end E of the groove in the groove extension direction (right direction in the plane of drawing) and is defined as a depth D1 of the groove.

In addition, at the position where the depth D1 of the groove is determined, a measurement cross-sectional curve forming the groove profile is obtained in a cross-section parallel to the rolling direction and sheet thickness direction by measurement using a laser microscope. In a case where after a low-pass filter with a cut-off value λs is applied to the measurement cross-sectional curve to obtain a cross-sectional curve, band-pass filters with cut-off values λf and λc are applied to the cross-sectional curve to remove a long wavelength component and a short wavelength component from the cross-sectional curve, a waviness curve WCT that defines the groove profile is obtained in a cross section parallel to the rolling direction and sheet thickness direction as illustrated in FIG. 3A. In the waviness curve WCT, the length of the imaginary line IL that is an extension of the surface of the base steel sheet in the rolling direction is determined, and this is defined as a width W1 of the groove.

In the same manner, depths D2, D3, D4, and D5 of the groove and widths W2, W3, W4, and W5 of the groove are obtained at positions 2 mm, 3 mm, 4 mm, and 5 mm from the end E of the groove in the groove extension direction, respectively.

In addition, an average groove depth Dc and an average groove width Wc at the center portion in the longitudinal groove direction are measured by the same method for measuring the groove depth and the groove width at the end portion of the groove using a laser microscope. The groove depths and the groove widths are measured at any five locations in the center portion (range of ±10 mm in the center) of one groove in the longitudinal groove direction, and the respective average values are defined as the average groove depth Dc and the average groove width Wc.

In addition, in the end portion of the groove, a width WO.05 of the groove at the portion where the depth of the groove is 0.05 × Dc and a width WO.50 of the groove at the portion where the depth of the groove is 0.50 × Dc are measured using a laser microscope.

Based on the waviness curve WCL that defines the groove profile in a cross section parallel to the sheet thickness direction and groove extending direction and passing through the center of the groove width as illustrated in FIG. 3B, the straight lines from the end E of the groove at the positions where the groove depths are 0.05 × Dc and 0.50 × Dc are obtained. At each position, a measurement cross-sectional curve forming the groove profile is obtained in a cross-section parallel to the rolling direction and sheet thickness direction by measurement using a laser microscope. In a case where after a low-pass filter with a cut-off value λs is applied to the measurement cross-sectional curve to obtain a cross-sectional curve, band-pass filters with cut-off values λf and λc are applied to the cross-sectional curve to remove a long wavelength component and a short wavelength component from the cross-sectional curve, a waviness curve WCT is obtained in a cross section parallel to the rolling direction and sheet thickness direction. In each waviness curve WCT, the length of the imaginary line IL that is an extension of the surface of the base steel sheet in the rolling direction is determined, and these are defined as WO.05 and WO.50.

In a case where the plurality of grooves are formed on the base steel sheet, it is preferable that all the grooves satisfy Formulae (1) to (4). Furthermore, it is more preferable to satisfy Formulae (3') and (4'), or Formulae (5) and (6), or Formulae (5') and (6').

In a case where grooves are repeatedly formed at equal intervals in the rolling direction under the same conditions, it is considered that when one groove satisfies Formulae (1) to (4), the other grooves also satisfy Formulae (1) to (4). However, in a case where the grooves are formed up to the end of the sheet width of a base steel sheet, the end E of the groove does not exist in the end portion of the groove. Therefore, the above-described measurement is not performed (the grooves are not regarded as grooves to be measured).

(Chemical Composition)

A chemical composition of the base steel sheet of the grain-oriented electrical steel sheet is not limited as long as it is equivalent to a chemical composition of a base steel sheet of a known grain-oriented electrical steel sheet. For example, Si: 2.50 to 4.50%, Mn: 0.010 to 0.150%, C: 0 to 0.085%, acid-soluble Al: 0 to 0.065%, N: 0 to 0.012%, Cr: 0 to 0.30%, Cu: 0 to 0.40%, P: 0 to 0.50%, Sn: 0 to 0.30%, Sb: 0 to 0.30%, Ni: 0 to 1.00%, S: 0 to 0.015%, Se: 0 to 0.015%, Bi: 0 to 0.10%, Nb: 0 to 0.10%, V: 0 to 0.10%, Mo: 0 to 0.10%, Ta: 0 to 0.10%, W: 0 to 0.10%, B: 0 to 0.080%, Ti: 0 to 0.10% in mass% can be contained as the chemical composition. In addition, the grain-oriented electrical steel sheet may contain the above-described chemical composition and the remainder of Fe and impurities.

The chemical composition of the grain-oriented electrical steel sheet (base steel sheet) may be measured by a general analysis method of steel. For example, the chemical component may be measured using inductively coupled plasma-atomic emission spectrometry (ICP-AES). In a case where the forsterite film and the insulating coating described later are formed, it is only sufficient that the insulating coating is removed from the grain-oriented electrical steel sheet by the method described above, and the forsterite film is removed by a known method such as pickling, followed by analysis of the chemical component of the base steel sheet. Specifically, for example, the chemical component can be analyzed by acquiring a test piece of 35 mm square (35mm × 35mm) from a center position of the base steel sheet after removal of the coating and film as needed, and performing measurement under a condition based on a calibration curve created in advance using ICPS-8100 manufactured by Shimadzu Corporation or the like (measurement apparatus). C and S, which are difficult to measure using ICP-AES, may be measured by a combustion-infrared absorption method, and N may be measured using an inert gas fusion-thermal conductivity method.

(Sheet Thickness)

A sheet thickness of the base steel sheet of the grain-oriented electrical steel sheet is not limited, and is preferably 0.15 to 0.30 mm. In a case where the sheet thickness of the base steel sheet is greater than 0.30 mm, the classical eddy-current loss increases and the iron loss increases. On the other hand, in a case where the sheet thickness is less than 0.15 mm, the rolling efficiency decreases, which is disadvantageous in terms of productivity and cost.

[Forsterite Film]

[Insulating coating]

The grain-oriented electrical steel sheet according to the present embodiment may include a base steel sheet and an insulating coating formed on a surface of the base steel sheet, or a forsterite film may be formed on the surface of the base steel sheet. In this case, the insulating coating may be formed on a surface of the forsterite film.
That is, the grain-oriented electrical steel sheet according to the present embodiment may include the base steel sheet, the forsterite film formed on the base steel sheet, and the insulating coating formed on the forsterite film.
The forsterite film and the insulating coating may be formed on one surface or may be formed on both surfaces.
The forsterite film is an inorganic film containing magnesium silicate as a main component. The forsterite film is formed by reaction of an annealing separator containing magnesia (MgO) applied to the surface of the base steel sheet with a component of the surface of the base steel sheet in final annealing, and has a composition (more specifically, a composition containing $Mg_2SiO_4$ as a main component) derived from the annealing separator and the component of the base steel sheet.
On the other hand, in a case where an annealing separator mainly containing $Al_2O_3$ is used in the final annealing, the forsterite film may not be formed.
The insulating coating has a function of applying electrical insulation properties and tension to the grain-oriented electrical steel sheet. The tension is applied to the grain-oriented electrical steel sheet to facilitate domain wall movement in the grain-oriented electrical steel sheet, and thus, the iron loss of the grain-oriented electrical steel sheet can be reduced.
In addition, according to the insulating coating, various properties such as rust resistance, heat resistance, and slippage can be obtained in addition to the electrical insulation properties and the tension as described above.
**In** the grain-oriented electrical steel sheet according to the present embodiment, the insulating coating may be, for example, a known coating formed by applying a coating solution containing phosphate and colloidal silica as main components to a surface of the base steel sheet or forsterite film and baking the coating solution (treatment to form an insulating coating).

<Manufacturing Method>

An effect of the grain-oriented electrical steel sheet according to the present embodiment can be obtained regardless of the manufacturing method as long as the grain-oriented electrical steel sheet has the above-described characteristics, but by a manufacturing method including the following steps, the grain-oriented electrical steel sheet according to the present embodiment can be obtained stably, which is preferable.

(I) a groove forming step of forming a plurality of grooves extending in a direction intersecting a rolling direction on a steel sheet at a predetermined interval in the rolling direction;

(II) a decarburization annealing step of performing decarburization annealing on the steel sheet after the groove forming step;

(III) a final annealing step of performing final annealing on the steel sheet after the decarburization annealing step; and

(IV) an insulating coating forming step of forming an insulating coating on the steel sheet (there may be a case where the forsterite film is formed on the base steel sheet) that serves as a base steel sheet and is obtained after the final annealing step, to obtain a grain-oriented electrical steel sheet having the base steel sheet, a forsterite film optionally formed on the base steel sheet, and the insulating coating formed on the base steel sheet or on the forsterite film.

In addition, in a case where the steel sheet is a cold-rolled steel sheet, the steel sheet subjected to the groove forming step can be manufactured by a manufacturing method including the following steps:

(V) a hot rolling step of heating and hot-rolling a slab to obtain a hot-rolled steel sheet;

(VI) a hot-rolled steel sheet annealing step of annealing the hot-rolled steel sheet after the hot rolling step; and

(VII) a cold rolling step of pickling the hot-rolled steel sheet after the hot-rolled steel sheet annealing step and cold-rolling the hot-rolled steel sheet to obtain a cold-rolled steel sheet.

The groove forming step, which is characteristic of obtaining the grain-oriented electrical steel sheet according to the present embodiment, will be described. In the other steps, known conditions may be set according to the target magnetic flux density before the groove is formed, and the description thereof is thus omitted.

However, in the final annealing step, in general, final annealing is performed after an annealing separator mainly composed of MgO or $Al_2O_3$ is applied. For example, when the annealing separator containing MgO as the main component is used, a forsterite ($Mg_2SiO_4$) film layer is formed. In a case where the annealing separator containing $Al_2O_3$ as the main component is used, the forsterite film may not be formed.

Therefore, the annealing separator may be selected according to the necessity of the formation of the forsterite film.

In addition, the chemical composition of the slab to be subjected to the hot rolling may be determined in consideration of a change in the chemical composition in each step in accordance with the chemical composition desired to be obtained as the grain-oriented electrical steel sheet.

For example, in a case where the preferred chemical composition of the base steel sheet of the grain-oriented electrical steel sheet according to the present embodiment described above, it is preferable to use the slab having the following chemical composition.

That is, the slab can contain, as the chemical composition, Si: 2.50 to 4.50%, Mn: 0.010 to 0.150%, C: 0.020 to 0.100%, acid-soluble Al: 0 to 0.065%, N: 0.002 to 0.030%, Cr: 0 to 0.30%, Cu: 0 to 0.40%, P: 0 to 0.50%, Sn: 0 to 0.30%, Sb: 0 to 0.30%, Ni: 0 to 1.00%, S: 0.001 to 0.050%, Se: 0 to 0.050%, Bi: 0 to 0.10%, Nb: 0 to 0.10%, V: 0 to 0.10%, Mo: 0 to 0.10%, Ta: 0 to 0.10%, W: 0 to 0.10%, B: 0 to 0.080%, Ti: 0 to 0.10% in mass%. In addition, the grain-oriented electrical steel sheet may contain the above-described chemical composition and the remainder of Fe and impurities.

(Groove Forming Step)

In the groove forming step, a plurality of grooves extending in a direction intersecting the rolling direction are formed at predetermined intervals in the rolling direction on a steel sheet such as a hot-rolled steel sheet or a cold-rolled steel sheet. The groove extending in the direction intersecting the rolling direction can be formed by irradiating the steel sheet with a laser beam while scanning the steel sheet in the direction intersecting the rolling direction. In addition, the plurality of grooves are formed at predetermined intervals in the rolling direction by repeatedly irradiating portions with a laser beam while shifting the scanning portions at predetermined intervals in the rolling direction.

During the formation of the grooves, a groove is formed by irradiation with the laser beam in such a manner that D1, D2, D3, D4, D5, W1, W2, W3, W4, and W5 satisfy the following Formulae (1) and (2), and in a case where a width of the groove at a portion where a depth of the groove is $0.05 \times Dc$ is WO.05, and a width of the groove at a portion where a depth of the groove is $0.50 \times Dc$ is WO.50, WO.05 and WO.50 satisfy the following Formulae (3) and (4), by changing the distance between the focal point of the laser beam and the surface of the base steel sheet in accordance with the distance from the end of the groove at the end portion of the groove.

Preferably, the grooves are formed in such a manner that WO.05 and WO.50 satisfy the following Formulae (3') and (4'), the following Formulae (5) and (6), or the following Formulae (5') and (6').

By forming the grooves satisfying Formulae (1) to (4), it is possible to improve the adhesion of the insulating coating formed in the subsequent step and to manufacture the grain-oriented electrical steel sheet with excellent adhesion of the insulating coating.

$$D5 \geq D4 \geq D3 \geq D2 \geq D1 \cdots (1),$$

$$W5 \geq W4 \geq W3 \geq W2 \geq W1 \cdots (2),$$

$$0.004 \leq W0.05/Wc \leq 0.210 \cdots (3),$$

$$0.180 \leq W0.50/Wc \leq 0.810 \cdots (4).$$

$$0.005 \leq W0.05/Wc \leq 0.200 \cdots (3')$$

$$0.200 \leq W0.50/Wc \leq 0.800 \cdots (4')$$

$$0.008 \leq W0.05/Wc \leq 0.160 \cdots (5)$$

$$0.380 \leq W0.50/Wc \leq 0.710 \cdots (6)$$

$$0.010 \leq W0.05/Wc \leq 0.150 \cdots (5')$$

$$0.400 \leq W0.50/Wc \leq 0.700 \cdots (6')$$

In a case where the groove is formed by laser irradiation, the laser energy on the surface of the steel sheet is reduced by shifting the focal point of the laser beam from the surface of the steel sheet, and the groove depth is shallower and the groove width is narrower. Therefore, the distance between the focal point of the laser beam and the surface of the base steel sheet is changed according to the distance from the end of the groove. That is, at the start of laser irradiation for forming one groove, the focal point of the laser beam is set to a position offset from the surface of the steel sheet, and the focal point is gradually moved to align with the surface of the steel sheet during the scanning, thereby allowing the groove depth and groove width to change within a certain range from the start point of the groove. Similarly, at the end of laser irradiation for forming one groove, the focal point of the laser beam is set to a position offset from the surface of the steel sheet, and the focal point is gradually moved to align with the surface of the steel sheet during the scanning, thereby allowing the groove depth and groove width to change within a certain range from the end point of the groove. The groove depth and the groove width can also be changed by changing a power or focused spot diameter of the laser beam, and the scanning speed. Since the groove depth and the groove width can be independently changed by changing conditions, the conditions are set in combination in such a manner that the groove depth and groove width satisfy the expressions (1) to (4).

Examples of the method for moving the focal point of the laser beam include a method of displacing the position of an optical component.

In the groove forming step, it is preferable to form a groove having an average groove depth Dc of 5.0 to 40.0 $\mu$m and an average groove width Wc of 10.0 to 200.0 $\mu$m at the center portion in the longitudinal groove direction from the viewpoint of magnetic domain refinement.

In the groove forming step, the laser irradiation conditions are not limited, but in the region other than the end portion of the groove, it is preferable that the power of the laser beam is 200 to 3000 W, the focused spot diameter defined as a diameter in the rolling direction that contains 86% of the power of the laser beam is 10 to 1000 $\mu$m, the focused spot diameter of the laser beam in the sheet width direction is 10 to 1000 $\mu$m, and the scanning speed is 2 to 50 m/s.

In this case, it is easy to form the grooves in which Dc and Wc are in a preferable range.

In addition, in the groove forming step, it is preferable to form the grooves in such a manner that each interval between the plurality of grooves in the rolling direction is 2 to 10 mm, and the angle between the longitudinal groove direction and the rolling direction is 60 to 120 degrees (°).

In this case, the iron loss reduction effect is increased.

Examples

A hot-rolled steel sheet having a sheet thickness of 2.6 mm was obtained by performing a hot rolling step on a slab having a chemical composition containing Si: 3.30%, Mn: 0.120% C: 0.060%, acid-soluble Al: 0.028%, N: 0.008%, Cr: 0.050%, Cu: 0.040%, P: 0.010%, Sn: 0.020%, Ni: 0.005%, and S: 0.007% in mass% with a remainder of Fe and impurities.

This hot-rolled steel sheet was subjected to hot-rolled steel sheet annealing under the conditions of heating to 1100°C and holding for 1 minute.

The hot-rolled steel sheet after hot-rolled steel sheet annealing was subjected to pickling and cold rolling to obtain a cold-rolled steel sheet having a thickness of 0.22 mm.

The obtained cold-rolled steel sheet was irradiated with a laser beam under various conditions illustrated in Table 1 for each No. to form the plurality of grooves (irradiation conditions of the laser beam were the same in one cold-rolled steel sheet). For the end portion of the groove, the depth and width of the groove are gradually changed by displacing the position of the polygon mirror.

The cold-rolled steel sheet after groove formation was subjected to decarburization annealing under the conditions of heating to 850°C and holding for 2 minutes.

An annealing separator containing magnesia (MgO) as a main component was applied to the cold-rolled steel sheet after the decarburization annealing, and the final annealing was performed on the cold-rolled steel sheet under the conditions of heating to 1200°C and holding for 20 hours. As a result, a steel sheet in which the forsterite film was formed on the surface of the cold-rolled steel sheet (base steel sheet) was obtained.

Next, a coating solution containing colloidal silica and aluminum phosphate was applied onto the forsterite film, and heat treatment was performed under conditions of heating to 850°C and holding for 1 minute to form an insulating coating. The thickness of the insulating coating was 5 $\mu$m.

A sample with 60 mm in the width direction and 300 mm in the rolling direction was collected from the obtained grain-oriented electrical steel sheet, and this sample was subjected to a single-sheet magnetic characteristics test (SST) in accordance with JIS C2556 (2015) to measure the magnetic flux density B8 generated when the sample was magnetized at 800 A/m.

A test piece with 30 mm $\times$ 30 mm was collected from a portion including the end portion of the groove of the obtained grain-oriented electrical steel sheet, the insulating coating was removed by the above-described method, and for one groove as a representative, the average groove depth Dc and the average groove width Wc at the center portion in the longitudinal groove direction, the depths D1 to D5 of the groove, and the widths W1 to W5 of the groove at the positions of 1 mm to 5 mm from the end of the groove at the end portion of the groove were then measured by the above-described method. For the same groove, in the end portion of the groove, a width of the groove at a portion where a depth of the groove is 0.05 $\times$ Dc was measured as WO.05, and a width of the groove at a portion where a depth of the groove is 0.50 $\times$ Dc was measured by the above-described method.

The results are illustrated in Table 2.

In the obtained grain-oriented electrical steel sheet, the adhesion of the insulating coating and the rust resistance were evaluated by the following method.

The results are illustrated in Table 3.

<Adhesion of Insulating coating>

A test piece with 80 mm $\times$ 80 mm was cut out from the portion including the end portion of the groove of the grain-oriented electrical steel sheet, wound around a round bar having a diameter of 20 mm, and then flatly stretched.

A surface of the test piece after being flattened was observed, and an area of the insulating coating not peeled off from the steel sheet with respect to an area of a bent portion was measured to calculate a coating residual area fraction (%).

The adhesion of the insulating coating of the test piece in which the coating residual area fraction was 95% or more was evaluated as "Excellent (Ex)", the adhesion of the insulating coating of the test piece in which the coating residual area fraction was 90% or more and less than 95% was evaluated as "Good (G)", and the adhesion of the insulating coating of the test piece in which the coating residual area fraction was less than 90% was evaluated as "Poor (P)".

<Rust Resistance>

A test piece with 30 mm$\times$30 mm was collected from the portion including the end portion of the groove of the obtained grain-oriented electrical steel sheet, and the test piece was left for 1 week in an atmosphere at a temperature of 50°C and a humidity of 91% and evaluated based on the weight change of the test piece before and after the leaving. When rust occurred, the weight of the test piece increased. Therefore, it was determined that the rust resistance was better as the weight increase amount was smaller.

Specifically, the rust resistance of the test piece in which the weight increase amount was 1.0 mg/m$^2$ or less was

evaluated as "Excellent (Ex)", the rust resistance of the test piece in which the weight increase amount was 5.0 mg/m$^2$ or less was evaluated as "Good (G)", and the rust resistance of the test piece in which the weight increase amount was more than 5.0 mg/m$^2$ was evaluated as "Poor (P)".

[Table 1]

| No. | Groove forming step | | | |
|---|---|---|---|---|
| | Laser irradiation conditions | | | |
| | Power | Rolling direction Focused spot diameter | Sheet width direction Focused spot diameter | Scanning speed |
| | W | μm | μm | m/s |
| 1 | 500 | 100 | 100 | 10 |
| 2 | 500 | 100 | 100 | 10 |
| 3 | 500 | 100 | 100 | 10 |
| 4 | 500 | 100 | 100 | 10 |
| 5 | 500 | 100 | 100 | 10 |
| 6 | 500 | 100 | 100 | 10 |
| 7 | 500 | 100 | 100 | 10 |
| 8 | 500 | 500 | 500 | 10 |
| 9 | 500 | 400 | 400 | 10 |
| 10 | 500 | 100 | 100 | 10 |
| 11 | 500 | 100 | 100 | 10 |
| 12 | 500 | 100 | 100 | 10 |
| 13 | 500 | 100 | 100 | 10 |

[Table 2]

| No. | Angle between extension direction and rolling direction | Interval between grooves in rolling direction | Center portion in groove longitudinal direction | | Groove | | | | | | | | | | | | | | | | | |
|---|---|---|---|---|---|---|---|---|---|---|---|---|---|---|---|---|---|---|---|---|---|---|
| | | | Average groove depth Dc | Average groove width Wc | End portion of the groove | | | | | | | | | | | | | | | | | |
| | | | | | D1 | D2 | D3 | D4 | D5 | W1 | W2 | W3 | W4 | W5 | D 0.05 | D 0.50 | W 0.05 | W 0.50 | W0.05 /Wc | W0.50 /Wc |
| | Degrees | mm | μm | μm | μm | μm | μm | μm | μm | μm | μm | μm | μm | μm | μm | μm | μm | μm | - | - |
| 1 | 95 | 4 | 20.1 | 39.0 | 4.2 | 8.1 | 12.4 | 17.5 | 19.8 | 10.5 | 15.4 | 20.4 | 24.1 | 33.4 | 1.0 | 10.1 | 1.2 | 19.9 | 0.031 | 0.510 |
| 2 | 95 | 4 | 19.5 | 42.0 | 3.3 | 7.1 | 10.5 | 16.4 | 18.7 | 9.7 | 17.8 | 21.5 | 25.7 | 30.4 | 1.0 | 9.8 | 5.8 | 20.1 | 0.138 | 0.479 |
| 3 | 95 | 4 | 21.4 | 40.1 | 5.5 | 10.4 | 13.7 | 18.7 | 20.1 | 5.4 | 14.9 | 19.7 | 26.7 | 37.4 | 1.1 | 10.7 | 3.1 | 17.4 | 0.077 | 0.434 |
| 4 | 95 | 4 | 19.9 | 38.9 | 6.1 | 9.7 | 11.1 | 18.8 | 19.8 | 10.4 | 18.7 | 27.9 | 35.7 | 38.1 | 1.0 | 10.0 | 3.4 | 25.1 | 0.087 | 0.645 |
| 5 | 95 | 4 | 20.3 | 40.5 | 5.1 | 11.4 | 14.8 | 17.9 | 20.0 | 11.4 | 18.2 | 28.1 | 37.6 | 40.2 | 1.0 | 10.2 | 3.5 | 15.1 | 0.086 | 0.373 |
| 6 | 95 | 4 | 19.7 | 41.2 | 3.8 | 10.8 | 16.7 | 17.4 | 19.0 | 15.7 | 25.7 | 37.8 | 39.7 | 41.1 | 1.0 | 9.9 | 0.3 | 22.4 | 0.007 | 0.544 |
| 7 | 95 | 4 | 21.7 | 41.1 | 3.1 | 6.7 | 9.8 | 10.5 | 18.2 | 12.4 | 15.3 | 16.7 | 19.5 | 30.8 | 1.1 | 10.9 | 10.1 | 20.1 | 0.246 | 0.489 |
| 8 | 95 | 4 | 18.7 | 100.1 | 2.1 | 5.7 | 8.9 | 10.5 | 14.9 | 10.5 | 24.8 | 35.7 | 47.9 | 75.8 | 0.9 | 9.4 | 0.3 | 41.5 | 0.003 | 0.415 |
| 9 | 95 | 4 | 24.8 | 87.9 | 7.8 | 10.2 | 15.4 | 21.4 | 23.0 | 4.1 | 12.8 | 27.9 | 55.4 | 61.8 | 1.2 | 12.4 | 5.4 | 15.1 | 0.061 | 0.172 |
| 10 | 95 | 4 | 18.8 | 42.5 | 2.4 | 5.1 | 8.7 | 9.1 | 15.9 | 15.7 | 21.9 | 29.7 | 34.8 | 41.0 | 0.9 | 9.4 | 5.5 | 38.7 | 0.129 | 0.911 |
| 11 | 95 | 4 | 25.1 | 50.3 | 5.9 | 15.4 | 12.3 | 20.8 | 24.1 | 11.8 | 23.4 | 24.7 | 37.4 | 45.1 | 1.3 | 12.6 | 7.1 | 25.8 | 0.141 | 0.513 |
| 12 | 95 | 4 | 18.4 | 36.7 | 2.4 | 5.1 | 9.3 | 12.7 | 17.4 | 5.7 | 14.2 | 12.7 | 27.4 | 34.3 | 0.9 | 9.2 | 2.4 | 13.4 | 0.065 | 0.365 |
| 13 | 95 | 4 | 20.0 | 50.0 | 19.8 | 20.1 | 19.9 | 20.2 | 20.0 | 50.1 | 49.9 | 50.0 | 51.0 | 49.5 | 1.0 | 10.0 | 2.5 | 13.4 | 0.050 | 0.268 |

[Table 3]

| No. | Evaluation | | | Note |
| --- | --- | --- | --- | --- |
| | Adhesion of insulating coating | Rust resistance | Magnetic flux density | |
| | | | T | |
| 1 | Excellent | Excellent | 1.931 | Inventive Example |
| 2 | Excellent | Excellent | 1.925 | Inventive Example |
| 3 | Excellent | Excellent | 1.920 | Inventive Example |
| 4 | Excellent | Excellent | 1.921 | Inventive Example |
| 5 | Good | Good | 1.920 | Inventive Example |
| 6 | Good | Good | 1.915 | Inventive Example |
| 7 | Poor | Poor | 1.905 | Comparative Example |
| 8 | Poor | Poor | 1.908 | Comparative Example |
| 9 | Poor | Poor | 1.901 | Comparative Example |
| 10 | Poor | Poor | 1.895 | Comparative Example |
| 11 | Poor | Poor | 1.887 | Comparative Example |
| 12 | Poor | Poor | 1.884 | Comparative Example |
| 13 | Poor | Poor | 1.880 | Comparative Example |

As can be seen from Tables 1 to 3, it was confirmed that the rust resistance and the adhesion of the insulating coating of the grain-oriented electrical steel sheet were improved by forming the grooves satisfying Formulae (1) to (4). In addition, by forming the grooves satisfying Formulae (3') and (4'), (5) and (6), or (5') and (6'), the grain-oriented electrical steel sheet exhibiting further improved rust resistance and adhesion of the insulating coating was obtained.

REFERENCE SIGNS LIST

1   Grain-oriented electrical steel sheet
2   Base steel sheet
3   Insulating coating
G   Groove
E   End of groove
D   Groove depth (collective term for D1, D2, D3, D4, D5, and Dc)
W   Groove Width (collective term for W1, W2, W3, W4, W5, and Wc)
IL   Imaginary line obtained by extending from surface of base steel sheet
S   Interval between grooves
RD   Rolling direction
TD   Sheet width direction
ND   Sheet thickness direction of base steel sheet

INDUSTRIAL APPLICABILITY

According to the present invention, it is possible to improve the rust resistance and adhesion of the insulating coating in the grain-oriented electrical steel sheet in which the grooves for reducing the iron loss are formed on the surface. Therefore, by using the grain-oriented electrical steel sheet of the present invention, it is possible to prevent an increase in the iron loss due to an interlayer current occurring when the steel sheets are laminated and to prevent external appearance defects.

**Claims**

1. A grain-oriented electrical steel sheet comprising:

a base steel sheet;
a forsterite film optionally formed on the base steel sheet; and
an insulating coating formed on the base steel sheet or the forsterite film, wherein
the base steel sheet has a plurality of grooves extending in a direction intersecting a rolling direction,
in a case where a direction in which the plurality of grooves extend is defined as a longitudinal groove direction,
a distance in the groove from an imaginary line that is an extension of a surface of the base steel sheet to the groove, along a straight line from the imaginary line in the sheet thickness direction of the base steel sheet, is defined as a groove depth,
a width of the groove in the rolling direction is defined as a groove width,
a position where the groove depth is 0.0 $\mu$m is defined as an end of the groove, and a 5 mm region extending from the end of the groove toward a center portion in the longitudinal groove direction is defined as an end portion of the groove,
in the longitudinal groove direction of the end portion of the groove, in units of $\mu$m, a groove depth at a position 1 mm from the end of the groove is defined as D1 and a groove width at the position 1 mm from the end of the groove is defined as W1, a groove depth at a position 2 mm from the end of the groove is defined as D2 and a groove width at the position 2 mm from the end of the groove is defined as W2, a groove depth at a position 3 mm from the end of the groove is defined as D3 and a groove width at the position 3 mm from the end of the groove is defined as W3, a groove depth at a position 4 mm from the end of the groove is defined as D4 and a groove width at the position 4 mm from the end of the groove is defined as W4, and a groove depth at a position 5 mm from the end of the groove is defined as D5 and a groove width at the position 5 mm from the end of the groove is defined as W5,
an average groove width of the groove at the center portion in the longitudinal groove direction is defined as Wc, and an average groove depth of the groove at the center portion in the longitudinal groove direction is defined as Dc,
the D1, the D2, the D3, the D4, the D5, the W1, the W2, the W3, the W4, and the W5 satisfy Formulae (1) and (2), and
in the end portion of the groove, in a case where a width of the groove at a portion where a depth of the groove is $0.05 \times$ Dc is defined as W0.05, and a width of the groove at a portion where a depth of the groove is $0.50 \times$ Dc is defined as W0.50, W0.05 and W0.50 satisfy Formulae (3) and (4),

$$D5 \geq D4 \geq D3 \geq D2 \geq D1 \cdots (1)$$

$$W5 \geq W4 \geq W3 \geq W2 \geq W1 \cdots (2)$$

$$0.004 \leq W0.05/Wc \leq 0.210 \cdots (3)$$

$$0.180 \leq W0.50/Wc \leq 0.810 \cdots (4).$$

2. The grain-oriented electrical steel sheet according to claim 1, wherein
the W0.05 and the W0.50 satisfy Formulae (5) and (6),

$$0.008 \leq W0.05/Wc \leq 0.160 \cdots (5)$$

$$0.380 \leq W0.50/Wc \leq 0.710 \cdots (6).$$

3. The grain-oriented electrical steel sheet according to claim 1, wherein
the D1, the D2, the D3, the D4, and the D5 satisfy Formula (1'),

$$D5 > D4 > D3 > D2 > D1 \cdots (1').$$

4. The grain-oriented electrical steel sheet according to claim 2, wherein
the D1, the D2, the D3, the D4, and the D5 satisfy Formula (1'),

$$D5 > D4 > D3 > D2 > D1 \cdots (1').$$

5. The grain-oriented electrical steel sheet according to any one of claims 1 to 4, wherein the Dc is 5.0 to 40.0 $\mu$m and the Wc is 10.0 to 200.0 $\mu$m.

6. The grain-oriented electrical steel sheet according to any one of claims 1 to 4, wherein
an interval between the plurality of grooves in the rolling direction is 2 to 10 mm, and an angle between the longitudinal groove direction and the rolling direction is 60 to 120 degrees.

7. The grain-oriented electrical steel sheet according to claim 5, wherein
an interval between the plurality of grooves in the rolling direction is 2 to 10 mm, and an angle between the longitudinal groove direction and the rolling direction is 60 to 120 degrees.

8. A method for manufacturing a grain-oriented electrical steel sheet comprising:

a groove forming step of irradiating a steel sheet with a laser beam while scanning the steel sheet in a direction intersecting a rolling direction to form a groove extending in the rolling direction;
a decarburization annealing step of performing decarburization annealing on the steel sheet after the groove forming step;
a final annealing step of performing final annealing on the steel sheet after the decarburization annealing step; and
an insulating coating forming step of forming an insulating coating on the steel sheet that serves as a base steel sheet and is obtained after the final annealing step, to obtain a grain-oriented electrical steel sheet having the base steel sheet, a forsterite film optionally formed on the base steel sheet, and the insulating coating formed on the base steel sheet or on the forsterite film, wherein
in the groove forming step,

in a case where a direction along which the groove extends is defined as a longitudinal groove direction, a distance in the groove from an imaginary line that is an extension of a surface of the base steel sheet to the groove, along a straight line from the imaginary line in the sheet thickness direction of the base steel sheet, is defined as a groove depth,
a width of the groove in the rolling direction is defined as a groove width,
a position where the groove depth is 0.0 $\mu$m is defined as an end of the groove, and a 5 mm region extending from the end of the groove toward a center portion in the longitudinal groove direction is defined as an end portion of the groove,
in the longitudinal groove direction of the end portion of the groove, in units of $\mu$m, a groove depth at a position 1 mm from the end of the groove is defined as D1 and a groove width at the position 1 mm from the end of the groove is defined as W1, a groove depth at a position 2 mm from the end of the groove is defined as D2 and a groove width at the position 2 mm from the end of the groove is defined as W2, a groove depth at a position 3 mm from the end of the groove is defined as D3 and a groove width at the position 3 mm from the end of the groove is defined as W3, a groove depth at a position 4 mm from the end of the groove is defined as D4 and a groove width at the position 4 mm from the end of the groove is defined as W4, and a groove depth at a position 5 mm from the end of the groove is defined as D5 and a groove width at the position 5 mm from the end of the groove is defined as W5,
an average groove width of the groove at the center portion in the longitudinal groove direction is defined as Wc, and an average groove depth of the groove at the center portion in the longitudinal groove direction is defined as Dc,

the groove is formed by irradiation with the laser beam in such a manner that
the D1, the D2, the D3, the D4, the D5, the W1, the W2, the W3, the W4, and the W5 satisfy Formulae (1) and (2) and
in the end portion of the groove, in a case where a width of the groove at a portion where a depth of the groove is 0.05 $\times$ Dc is defined as W0.05, and a width of the groove at a portion where a depth of the groove is 0.50 $\times$ Dc is defined as W0.50, W0.05 and W0.50 satisfy Formulae (3) and (4), by changing a distance between a focal point of the laser beam and the surface of the base steel sheet in accordance with a distance from the end of the groove at the end portion of the groove,

$$D5 \geq D4 \geq D3 \geq D2 \geq D1 \cdots (1)$$

$$W5 \geq W4 \geq W3 \geq W2 \geq W1 \cdots (2)$$

$$0.004 \leq W0.05/Wc \leq 0.210 \cdots (3)$$

$$0.180 \leq W0.50/Wc \leq 0.810 \cdots (4).$$

9. The method for manufacturing a grain-oriented electrical steel sheet according to claim 8, wherein in the groove forming step, the groove is formed in such a manner that the W0.05 and the W0.50 satisfy Formulae (5) and (6),

$$0.008 \leq W0.05/Wc \leq 0.160 \cdots (5)$$

$$0.380 \leq W0.50/Wc \leq 0.710 \cdots (6).$$

10. The method for manufacturing a grain-oriented electrical steel sheet according to claim 8 or 9, wherein in the groove forming step, the groove in which the Dc is 5.0 to 40.0 $\mu$m and the Wc is 10.0 to 200.0 $\mu$m is formed under irradiation conditions of the laser beam that a power of the laser beam is set to 200 to 3000 W, a focused spot diameter of the laser beam defined as a diameter in the rolling direction that contains 86% of the power is set to 10 to 1000 $\mu$m, the focused spot diameter of the laser beam in a sheet width direction is 10 to 1000 $\mu$m, and a scanning speed is set to 2 to 50 m/s.

11. The method for manufacturing a grain-oriented electrical steel sheet according to claim 8 or 9, wherein in the groove forming step, the groove is formed in such a manner that an interval between a plurality of the grooves in the rolling direction is 2 to 10 mm, and an angle between the longitudinal groove direction and the rolling direction is 60 to 120 degrees.

12. The method for manufacturing a grain-oriented electrical steel sheet according to claim 10, wherein in the groove forming step, the groove is formed in such a manner that an interval between a plurality of the grooves in the rolling direction is 2 to 10 mm, and an angle between the longitudinal groove direction and the rolling direction is 60 to 120 degrees.

# FIG. 1

# FIG. 2A

## FIG. 2B

## FIG. 3A

FIG. 3B

## INTERNATIONAL SEARCH REPORT

| International application No. |
| --- |
| **PCT/JP2024/024295** |

**A. CLASSIFICATION OF SUBJECT MATTER**

*C22C 38/00*(2006.01)i; *C21D 8/12*(2006.01)i; *C21D 9/46*(2006.01)i; *C22C 38/60*(2006.01)i; *C23C 22/00*(2006.01)i; *H01F 1/147*(2006.01)i
FI: C22C38/00 303U; C21D8/12 D; C21D9/46 501B; C23C22/00 B; H01F1/147 183; C22C38/60

According to International Patent Classification (IPC) or to both national classification and IPC

**B. FIELDS SEARCHED**

Minimum documentation searched (classification system followed by classification symbols)

C22C38/00-38/60; C21D8/12; C21D9/46; H01F 1/147

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2016/171129 A1 (NIPPON STEEL & SUMITOMO METAL CORPORATION) 27 October 2016 (2016-10-27) | 1-12 |
| A | WO 2016/171117 A1 (NIPPON STEEL & SUMITOMO METAL CORPORATION) 27 October 2016 (2016-10-27) | 1-12 |
| A | WO 2016/171124 A1 (NIPPON STEEL & SUMITOMO METAL CORPORATION) 27 October 2016 (2016-10-27) | 1-12 |
| A | JP 2022-503782 A (POSCO) 12 January 2022 (2022-01-12) | 1-12 |
| P, A | WO 2024/111630 A1 (NIPPON STEEL CORPORATION) 30 May 2024 (2024-05-30) | 1-12 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **11 September 2024** | **24 September 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**EP 4 741 523 A1**

| International application No. |
|---|
| **PCT/JP2024/024295** |

| Patent document cited in search report | | | Publication date (day/month/year) | Patent family member(s) | | | Publication date (day/month/year) |
|---|---|---|---|---|---|---|---|
| WO | 2016/171129 | A1 | 27 October 2016 | US | 2018/0036838 | A1 | |
| | | | | EP | 3287532 | A1 | |
| | | | | KR | 10-2017-0122819 | A | |
| | | | | CN | 107406903 | A | |
| | | | | BR | 112017019141 | A2 | |
| | | | | RU | 2678351 | C1 | |
| | | | | PL | 3287532 | T3 | |
| WO | 2016/171117 | A1 | 27 October 2016 | US | 2018/0043474 | A1 | |
| | | | | EP | 3287537 | A1 | |
| | | | | CN | 107208223 | A | |
| | | | | KR | 10-2017-0100006 | A | |
| | | | | BR | 112017016967 | A2 | |
| | | | | RU | 2682267 | C1 | |
| | | | | PL | 3287537 | T3 | |
| WO | 2016/171124 | A1 | 27 October 2016 | US | 2018/0066334 | A1 | |
| | | | | EP | 3287538 | A1 | |
| | | | | KR | 10-2017-0107084 | A | |
| | | | | CN | 107406935 | A | |
| | | | | BR | 112017018677 | A2 | |
| | | | | RU | 2682363 | C1 | |
| | | | | PL | 3287538 | T3 | |
| JP | 2022-503782 | A | 12 January 2022 | US | 2022/0119901 | A1 | |
| | | | | WO | 2020/059999 | A1 | |
| | | | | EP | 3855458 | A1 | |
| | | | | KR | 10-2020-0034378 | A | |
| | | | | CN | 113039622 | A | |
| WO | 2024/111630 | A1 | 30 May 2024 | (Family: none) | | | |

**EP 4 741 523 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023111726 A
- JP 4669565 B
- JP H0657335 A
- JP 4016431 B
- JP 6418322 B
- JP 2022503782 A